Europäisches Patentamt

European Patent Office

Office européen des brevets

(19)

(11) Veröffentlichungsnummer: **0 229 291**

**A1**

(12) # EUROPÄISCHE PATENTANMELDUNG

(21) Anmeldenummer: 86116784.9

(51) Int. Cl.⁴: **C03C 17/28** , //B01L3/00

(22) Anmeldetag: 03.12.86

(30) Priorität: 10.12.85 HU 471685

(43) Veröffentlichungstag der Anmeldung:
**22.07.87 Patentblatt 87/30**

(84) Benannte Vertragsstaaten:
**AT BE CH DE ES FR GB GR IT LI LU NL SE**

(71) Anmelder: **Magyar Tudomanyos Akademia
Kutatasi Eszközöket Kivitelezö Vallalata
Komocsy ut 29-31
Budapest XIV(HU)**

(72) Erfinder: **Blaha, Gyula
Zsókavár u. 37
H-1157 Budapest(HU)**
Erfinder: **Deák, Ferenc
Rákóczi ut 23
H-2360 Gyál(HU)**

(74) Vertreter: **Lemcke, Rupert, Dipl.-Ing. et al
Patentanwälte Dipl.-Ing. R. Lemcke Dr.-Ing.
H.J. Brommer Amalienstrasse 28 Postfach
4026
D-7500 Karlsruhe 1(DE)**

(54) **Verfahren zur Verbesserung der Dichtung von glastechnischen Schliffen.**

(57) Die Erfindung ist ein Verfahren zur Verbesserung der Dichtung von glastechnischen Schliffen, wobei an der dichtenden Fläche des Stöpselgliedes des Schliffpaares ein selbsthaftender Überzug von höchstens 40 μm Dicke aus Teflon oder Teflonabkömmling verfertigt wird.

EP 0 229 291 A1

# VERFAHREN ZUR VERBESSERUNG DER DICHTUNG VON GLASTECHNISCHEN SCHLIFFEN

Die Erfindung bezieht sich auf ein Verfahren zur Verbesserung der Dichtfähigkeit von geschliffenen Flächen der bei den Anschlüssen von laboratorischen Glasmitteln verwendeten Elemente.

Die häufigste Methode des Anschliessens von laboratorischen Glasmitteln ist der normal-oder kugelgeschliffene Anschluss, dessen Grundausführung auch bei Hähnen verwendet ist.

Die Herstellung der Glasschliffe ist eine kostspielige, arbeits-und energieaufwändige Operation, und zugleich verursacht derer Anwendung in der labortechni schen Praxis bei bestimmten Operationen grosse Probleme.

Von diesen kann als die am häufigsten vorkommende Mangelhaftigkeit erwähnt werden, dass Glasschliffe in Naturzustand nur für die Förderung von Flüssigkeiten ohne Wärmung eine genügende Dichtigkeit gewähren. Im Falle von Strömen und Gasen, Dämpfen und bei Verwendung eines Unterdruckes kann die entsprechende Dichtigkeit nur erreicht werden, wenn als Schmierstoff Fett oder eine Paste verwendet ist, welche aber mit demjenigen Nachteil verbunden ist, dass sie mit ihrer Lösung in den Vorgängen teilnehmen und diese verschmutzen, wobei sie den Unterdruck abbauen.

Auch diejenige bekannte Erscheinung kann nicht vernachlässigt werden, welche sowohl bei höheren Temperaturen als auch am Unterdurck häufig vorkommt, dass sich die Schliffe einklemmen und ohne Glasbruch nicht gelöst werden können. Bei Hähnen ist aus demselben Grund der Tausch der Vorgänge unmöglich.

Neuerlich wird es versucht, die obigen Mangelhaftigkeiten bei Glasgeräten mittels Verwendung von zwischen den Schliffen angeordneter dünner Folie /Teflon/ zu beseitigen. Im Falle von Hähnen ist eine Glas-Teflon-Kombination verwendet, wobei der Hahnkörper aus Teflon hergestellt ist.

Die Verwendung der Teflonfolie ist wegen ihrer Verletzbarkeit unsicher, sie ist nicht wiederverwendbar. Der Teflonhahnkörper ist zur Deformation geneigt, er kann seine Vakuum-Dichtungsfähigkeit verlieren.

Zielsetzung unserer Erfindung ist, die Undichtigkeitsfehler und das Zusammenfressen der Schliffe zu vermeiden.

Nach gründlicher Prüfung des Problems sind wir zu dem Ergebnis gelangen, dass zwecks Vermeidung der Deformation der Glaskörper verwendet, aber das Teflon nicht als Folie, sondern als fest befestigter Überzug verwendet werden muss.

Die Erfindung bezieht sich auf eine Verfahren zur Verbesserung der Dichtheit der glastechnischen Schliffe, wobei an der Dichtungsfläche des Stöpselgliedes des Schliffpaares aus Teflon oder Teflonabkömmling ein selbsthaftender Überzug von max. 40 µm Dicke verfertigt wird.

Bei einer vorzüglichen Durchführungsart des erfindungsgemässen Verfahrens wird der Überzug mit Streuung hergestellt.

Bei einer anderen vorzüglichen Durchführungsart des erfindungsgemässen Verfahrens wird der Überzug mit Eintauchen hergestellt.

Das erfindungsgemässe Verfahren wird nachfolgend anhand eines Ausführungsbeispiels näher erläutert.

Am Stöpselglied des Schliffpaares eines laboratorischen Glasmittels wurde -nach dem Einschleifen -mittels Eintauchen ein Teflonüberzug von 40 µm Dicke verfertigt.

Während der Verwendung wurde festgestellt, dass die am Stöpsel verwendete flexible Schicht bei Berührung mit der Glasfläche des Gegenstückes dessen Form aufnimmt und dadurch eine vollständige Vakuumdichte gewährleistet. Keinerlei Schmierstoff sollte weder zur Gewährleistung der Dichtung, noch gegen das Einfressen verwendet werden. Der Überzug widersteht auch den Chemikalien und der hohen Temperatur, und seine Dichtungsfähigkeit hat nicht abgenommen.

Bei der Herstellung weiterer derartiger Glasarmaturen wurde festgestellt, dass diese nicht vollkommen zusammengeschliffen werden müssen, sondern ein mittels weniger anspruchsvoller Technologie hergestelltes natürliches Schliffpaar genügt.

Nach langdauernder Verwendung wurde festgestellt, dass sich das Schliffpaar nicht erwärmt, und der Überzug nicht leicht beschädigt wird, sogar nur mit Zerstörung entfernt werden kann.

Da sich der Teflonüberzug am Gegenstück anpasst, ist das mit Überzug versehene Stöpselglied mit den Schliffpaaren der bereits vorhandenen Glasarmaturen austauschkorrekt.

## Ansprüche

1. Verfahren zur Verbesserung der Dichtung von glastechnischen Schliffen, **dadurch gekennzeichnet,** dass an der dichtenden Fläche des Stöpselgliedes des Schliffpaares ein selbsthaftender Überzug von höchstens 40 µm Dicke aus Teflon oder Teflonabkömmling verfertigt wird.

2. Verfahren nach Anspruch 1, **dadurch gekennzeichnet,** dass der Überzug mit Streuung verfertigt wird.

3. Verfahren nach Anspruch 1, **dadurch gekennzeichnet,** dass der Überzug mit Eintauchen verfertigt wird.

## EINSCHLÄGIGE DOKUMENTE

EP 86116784.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A - 1 648 837 (BÄTZ)<br>   * Seite 5, Zeilen 7-11; Fig. 1 *<br><br>-- | 1 | C 03 C 17/28<br>//B 01 L 3/00 |
| Y | DE - B - 1 101 817 (MATSCHKE)<br>   * Anspruch 1 *<br><br>-- | 1 | |
| A | GB - A - 1 400 664 (CARL-ZEISS-STIFTUNG)<br>   * Ansprüche 1,2,3,8 *<br><br>---- | 1 | |

RECHERCHIERTE SACHGEBIETE (Int. Cl.4)

C 03 C

B 01 L

Der vorliegende Recherchenbericht wurde für alle Patentansprüche erstellt.

| Recherchenort | Abschlußdatum der Recherche | Prüfer |
|---|---|---|
| WIEN | 12-03-1987 | HAUSWIRTH |